# EUROPÄISCHE PATENTSCHRIFT

(11) **EP 0 921 016 B1**
(45) Veröffentlichungstag und Bekanntmachung des Hinweises auf die Patenterteilung: **26.05.2004**
(21) Anmeldenummer: 98119561.3
(22) Anmeldetag: 16.10.1998
(51) Int. Cl.: B60B 3/10, B60B 3/08

(54) **Befestigungsvorrichtung für ein aus einer Radinnen- und einer Radaussenschale bestehendes Fahrzeugrad**
Mounting device for a vehicle wheel comprising an interior and an exterior shell
Dispositif de fixation pour une roue de véhicule composée d'une enveloppe intérieure et une enveloppe extérieure

(30) Priorität: 06.12.1997 DE 19754188
(43) Veröffentlichungstag der Anmeldung: 09.06.1999
(73) Patentinhaber: Dr.Ing. h.c.F. Porsche Aktiengesellschaft, 70435 Stuttgart (DE)
(72) Erfinder: Hummel, Frank, 72800 Eningen (DE); Stach, Jens, 71296 Heimsheim (DE)

(56) Entgegenhaltungen:
- EP-A- 0 315 897
- DE-A- 2 235 619
- DE-A- 19 601 778
- DE-C- 4 306 484
- DE-U- 7 200 847
- FR-A- 1 257 088
- US-A- 4 679 860

## Beschreibung

Die Erfindung bezieht sich auf eine Befestigungsvorrichtung für ein aus einer Radinnenund einer Radaußenschale bestehendes Fahrzeugrad nach dem Oberbegriff des Anspruchs 1.

Aus der DE 196 01 778 A1 ist ein Fahrzeugrad aus zwei Schalen bestehend bekannt. Diese Schalen umfassen eine Radinnenschale und eine Radaußenschale, wobei die Radinnenschale eine Felge und die Radaußenschale einen Felgenstern des Rades bildet. Beide Radteile werden über Schweißungen miteinander verbunden. Ferner ist aus dem DE-U 72 00 847 ein zweischaliges Fahrzeugrad bekannt, bei dem die Radteile im Nabenbereich über buchsenartige Befestigungselemente miteinander verbunden sind, in den Radschrauben eingesetzt werden.

Aus der gattungsgemäßen DE-OS 22 35 619 geht ein Treib- und/ oder Laufrad für Kraftfahrzeuge hervor, bei dem eine die Radschüssel bildende Radscheibe durch eine Stützscheibe verstärkt ist. Die Radscheibe ist zusammen mit der Stützscheibe durch Radschrauben an einer Radnabe gehalten. Die Radschrauben sind hierbei in Buchsen eingesetzt, die in Bohrungen der Scheiben eingepresst gehalten sind.

Die Aufgabe der Erfindung besteht darin, für ein zweischaliges Fahrzeugrad mit Hohlspeichen eine einfache, mechanische und feuchtigkeitsdichte Verbindungsmöglichkeit im Radnabenbereich zu schaffen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch eine einfache mechanische Verbindung im Radnabenbereich mittels Buchsen und Radschrauben eine Abdichtung sowie Befestigung erfolgt. Die Buchsen sind mittels einer Presspassung in die Bohrungen der Radschalen eingesetzt. Dies ist erforderlich, damit kein Wasser bzw. keine Feuchtigkeit in die Hohlräume zwischen den Schalen eindringen kann. Hierzu kann die Buchse außerdem noch in einer Dichtmasse, wie beispielsweise Silikon eingebettet sein.

Die Buchsen sind in einer Vertiefung der Radaußenschale eingesetzt und stützen sich mit einem Bund in dieser ab. Hierdurch wird eine homogene Einleitung einer Vorspannkraft erzielt.

Das an den Bund anschließende Buchsenteil ragt in Bohrungen der beiden Schalen und kann mit seinem freien Ende bündig mit der Innenfläche der Radinnenschale abschließen oder im Abstand zu dieser enden.

Bei der Verwendung einer Magnesiumlegierung für das Rad ist zur Vermeidung einer Kontaktkorrosion zwischen Radinnenschale und dem Bremsscheibentopf aus Stahl eine zwischengelegte Scheibe aus einer Aluminumlegierung erforderlich. Diese kann über die in die Scheibe eingepreßten Buchsen zentriert und befestigt werden Alternativ besteht die Möglichkeit die Scheibe so auszubilden das sie den Bremsscheibentopf umfaßt und sich an diesem durch eine form- oder kraftschlüssige Verbindung zentriert und befestigt Die Scheibe ist zur Radinnenschale beispielsweise mit Silikon abgedichtet.

Nach einer weiteren Ausführung kann die Scheibe durch ein Topfelement ersetzt werden, das den Bremsscheibentopf umgreift und mit diesem z.B. durch eine Einpressung verbunden ist. Es wird durch dieses Topfelement eine Kontaktkorrosion vermieden, die Einpreßtiefe kann korrigiert werden und gleichzeitig wird die korrosionsgefährdete Fläche des Bremsscheibentopfes abgedeckt.

Statt einer eingepreßten Buchse mit ebener Abstützfläche zum Kopf der Radschraube kann auch eine halbkugelige Fläche im Kopf der Buchse vorgesehen sein, in der sich eine entsprechend ausgeformte Scheibe abstützt.

Ausführungsbeispiele der Erfindung sind in den Zeichnungen dargestellt und werden im folgenden näher beschrieben.

Es zeigen
- Fig. 1: einen Schnitt durch ein teilweise dargestelltes Fahrzeugrad mit einer Radinnenschale und einer Radaußenschale sowie einer Buchse für Radschrauben und einer Zwischenscheibe,
- Fig. 2: einen Schnitt durch ein teilweise dargestelltes Fahrzeugrad gemäß Fig. 1 ohne Zwischenscheibe,
- Fig. 3: eine weitere Ausführung mit einem Topfelement zwischen Rad und Bremsscheibe und
- Fig. 4: eine Ausführung für alle Ausführungsvarianten mit einer Zwischenscheibe und einer Hülse die miteinander korrespondierende Kugelflächen aufweisen.

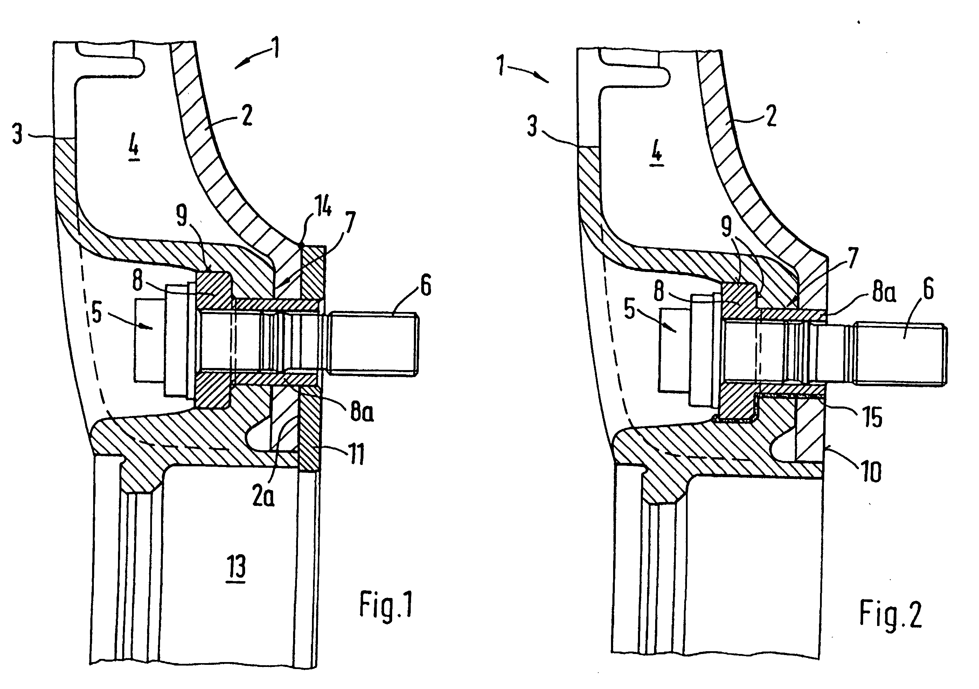

In den Fig. 1 und 2 ist ein Fahrzeugrad 1 dargestellt, das eine Radinnenschate 2 und eine Radaußenschale 3 aus einer Aluminiumlegierung umfaßt. Zwischen diesen beiden Schalen 2 und 3 bilden sich Hohlspeichen 4. Eine Verbindung der beiden Schalen 2 und 3 erfolgt einerseits über mindestens eine Schweißung (nicht dargestellt) und Radschrauben 5, welche mit ihrem freien Ende 6 in einem Bremsscheibentopf (nicht dargestellt) einschraubbar sind.

Die Radschrauben 5 sind in einer Buchse 7 angeordnet, welche mit einer Preßpassung in Bohrungen der Schalen 2, 3 eingesetzt werden.

Die Buchse 7 weist einen Bund 8 auf der sich in einer Aufnahme 9 der Radaußenschale 3 abstützt. Das Buchsenteil 8a erstreckt sich in den Bohrungen der Schalen und schließt mit seinem freien Ende 6 bündig mit der Innenfläche 10 der Radinnenschale 2 ab.

Nach einer weiteren Ausführung der Erfindung gemäß Fig. 1 ist zur Vermeidung einer Kontaktkorrosion zwischen der Radschale 2, 3 aus Magnesium bzw. einer Magnesiumlegierung und dem Bremsscheibentopf eine Zwischenscheibe 11 vorgesehen, die aus einer Aluminiumlegierung besteht.

Damit eine Abdichtung 15 zwischen den beiden Radschalen 2 und 3 gewährleistet ist, wird die Buchse 7 in einer Dichtmasse, wie beispielsweise Silikon eingesetzt. Ebenfalls kann die Zwischenscheibe 11 mit Silikon 14 zur Radinnenschale 2 abgedichtet sein.

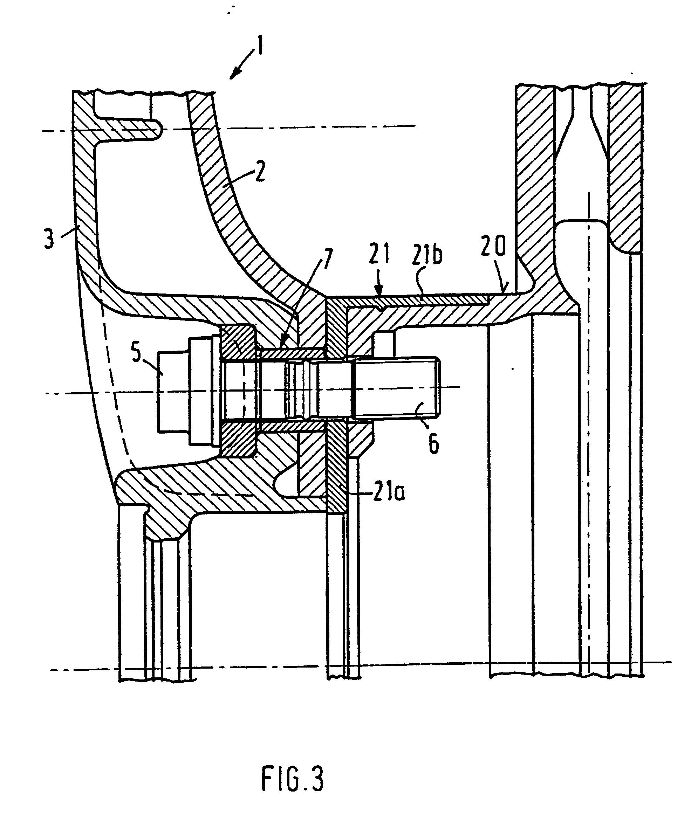

Gemäß Fig. 3 ist eine Ausführung gezeigt, die statt einer Scheibe 11 ein Topfelement 21 zeigt, welches sich mit einem Teil 21a zwischen dem Rad 1 und einem Bremsscheibentopf 20 erstreckt und mit dem weiteren Teil 21 b am Umfang des Bremsscheibentopfes 20 befestigt ist. Die Befestigung kann durch Kleben, eine Einpressung oder dergleichen erfolgen.

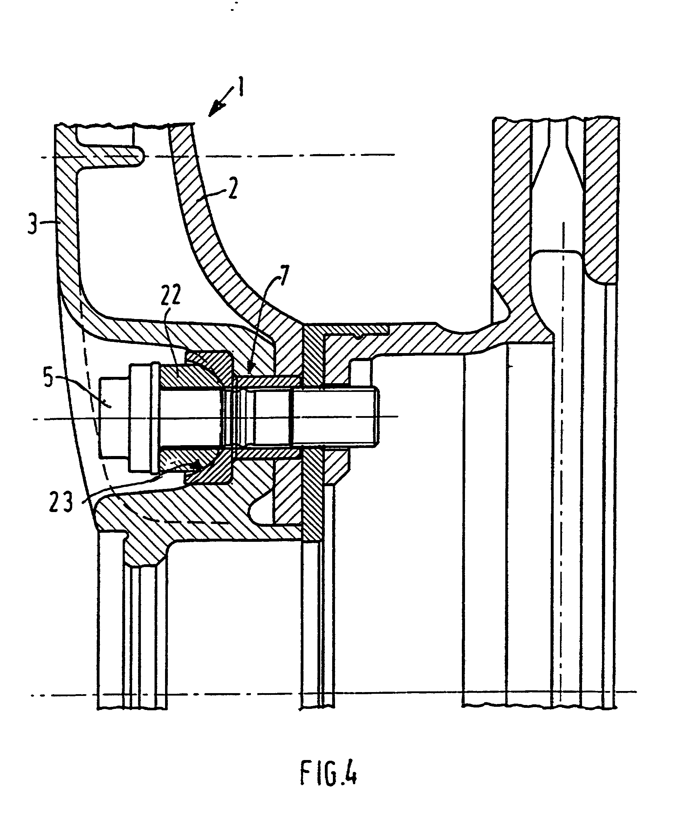

Gemäß Fig. 4 ist eine Ausführung der Radschraube 5 mit einer Zwischenscheibe 22 gezeigt, die eine kugelförmige Stützfläche 23 aufweist, welche sich in einer entsprechend ausgebildeten kugelförmigen Fläche der Buchse 7 abstützt. Eine solche Ausführung einer Zwischenscheibe 22 und einem Kopf der Buchse ist für alle gezeigten Ausführungen geeignet.

## Patentansprüche

1. Befestigungsvorrichtung für ein aus einer Radinnenschale (2) und einer Radaußenschale (3) bestehendes Rad (1) eines Kraftfahrzeugs, insbesondere aus einer Leichtmetalllegierung, die Radschrauben (5) und Buchsen (7) umfasst, welche konzentrisch zu einer Radnabe angeordnet sind, wobei die beiden Schalen (2, 3) des Rades über die in den Buchsen (7) eingesetzten Radschrauben (5) miteinander verbindbar sind und die Buchsen (7) in Bohrungen der Schalen (2, 3) eingepresst und gehalten sind, **dadurch gekennzeichnet, dass** die Buchsen (7) mittels einer feuchtigkeitsdichten Presspassung in Bohrungen der Schalen (2,3) gehalten sind.

2. Befestigungsvorrichtung nach Anspruch 1, **dadurch gekennzeichnet, dass** die Buchse (7) mit einem Bund (8) in einer Abstützaufnahme (9) der Radaußenschale (3) angeordnet ist und ein anschließendes Buchsenteil (8a) durch Bohrungen in beide Schalen (2, 3) des Rades (1) ragt und ein freies Ende (6) der Buchse mit der Radinnenschale (2) annähernd bündig abschließt.

3. Befestigungsvorrichtung nach den Ansprüchen 1 oder 2, **dadurch gekennzeichnet, dass** das Rad (1) und die Buchsen (7) aus einer Aluminiumlegierung bestehen.

4. Befestigungsvorrichtung für ein aus einer Radinnen- und Radaußenschale bestehendes Rad eines Kraftfahrzeugs aus einer Magnesiumlegierung nach Anspruch 1, **dadurch gekennzeichnet, dass** zwischen einer Innenfläche (2a) der Radinnenschale (2) des Rades (1) und einer Anlagefläche des Bremsscheibentopfes eine Scheibe (11) aus einem Aluminiumwerkstoff angeordnet ist, wobei das freie Ende (6) des Buchsenteils (8a) annähernd bündig mit der Scheibe (11) abschließt.

5. Befestigungsvorrichtung nach den Ansprüchen 1, 2, 3 oder 4, **dadurch gekennzeichnet, dass** zwischen der Innenschale (2) des Rades und einem Bremsscheibentopf (20) ein mit diesem verbundenes Topfelement (21) angeordnet ist, und welches auf dem Bremsscheibentopf (20) befestigbar ist.

6. Befestigungsvorrichtung nach einem oder mehreren der vorhergehenden Ansprüche, **dadurch gekennzeichnet, dass** die Radschraube (5) eine Zwischenscheibe (22) mit einer Kugelbandfläche (23) aufweist, die in einer korrespondierenden Fläche einer Abstützscheibe (20) abgestützt ist.

7. Befestigungsvorrichtung nach einem oder mehreren der vorhergehenden Ansprüche, **dadurch gekennzeichnet, dass** die Scheibe (11) gegenüber der Radinnenschale (2) mit einer Dichtmasse (14) abgedichtet ist.

## Claims

1. A fastening device for a wheel (1) - comprising an inner shell (2) and an outer shell (3) - of a motor vehicle, in particular made of a light-metal alloy, which comprises wheel bolts (5) and bushes (7) which are arranged concentrically with respect to a wheel hub, wherein the two shells (2, 3) of the wheel are capable of being connected to each other by way of the wheel bolts (5) inserted into the bushes (7) and the bushes (7) are pressed into bores in the shells (2, 3) and are held in them, **characterized in that** the bushes (7) are held in bores in the shells (2, 3) by means of a moisture-tight press fitting.

2. A fastening device according to Claim 1, **characterized in that** the bush (7) is arranged with a collar (8) in a supporting receiving means (9) of the outer shell (3) of the wheel, and an adjoining bush part (8a) projects through bores in the two shells (2, 3) of the wheel (1) and a free end (6) of the bush terminates substantially flush with the inner shell (2) of the wheel.

3. A fastening device according to Claims 1 or 2, **characterized in that** the wheel (1) and the bushes (7) consist of an aluminium alloy.

4. A fastening device for a wheel - comprising an inner shell and an outer shell - of a motor vehicle, made of a magnesium alloy according to Claim 1, **characterized in that** a disc (11) made of an aluminium material is arranged between an inner face (2a) of the inner shell (2) of the wheel (1) and an abutment face of the brake-disc chamber, wherein the free end (6) of the bush part (8a) terminates substantially flush with the disc (11).

5. A fastening device according to Claims 1, 2, 3 or 4, **characterized in that** a chamber element (21), which is connected to a brake-disc chamber (20) and which is capable of being fastened on the brake-disc chamber (20), is arranged between the inner shell (2) of the wheel and the brake-disc chamber (20).

6. A fastening device according to one or more of the preceding Claims, **characterized in that** the wheel bolt (5) has an intermediate disc (22) with a spherical face (23) which is supported in a corresponding face of a support disc (20).

7. A fastening device according to one or more of the preceding Claims, **characterized in that** the disc (11) is sealed off from the inner shell (2) of the wheel by a sealing compound (14).

## Revendications

1. Dispositif de fixation pour une roue (1) de véhicule automobile, constituée d'une coquille intérieure (2) et d'une coquille extérieure, (3) en particulier en un alliage de métaux légers, lequel dispositif comprend des vis de roue (5) et des douilles (7) qui sont disposées concentriquement par rapport à un moyeu de roue, les deux coquilles (2, 3) de la roue pouvant être reliées entre elles par des vis de roue (5) insérées dans les douilles (7), et les douilles (7) étant enfoncées et maintenues dans des perçages des coquilles (2, 3), **caractérisé en ce que** les douilles (7) sont maintenues par ajustement pressé, étanche à l'humidité, dans des perçages des coquilles (2, 3).

2. Dispositif de fixation selon la revendication 1, **caractérisé en ce que** la douille (7) est disposée par un épaulement (8) dans un logement d'appui (9) de la coquille extérieure (3) de la roue, et une partie de douille (8a) suivante pénètre, à travers des perçages, dans les deux coquilles (2, 3) de la roue (1), et une extrémité libre (6) de la douille se termine approximativement à fleur de la coquille intérieure (2) de la roue.

3. Dispositif de fixation selon les revendications 1 ou 2, **caractérisé en ce que** la roue (1) et les douilles (7) sont constituées d'un alliage d'aluminium.

4. Dispositif de fixation pour une roue, constituée d'une coquille intérieure et d'une coquille extérieure, d'un véhicule automobile, en un alliage de magnésium selon la revendication 1, **caractérisé en ce qu'**un disque (11) en un matériau d'aluminium est disposé entre une surface intérieure (2a) de la coquille intérieure (2) de la roue (1) et une surface de contact du pot du disque de frein, l'extrémité libre (6) de la partie de douille (8a) se terminant approximativement à fleur du disque (11).

5. Dispositif de fixation selon les revendications 1, 2, 3 ou 4, **caractérisé en ce qu'**entre la coquille intérieure (2) de la roue et un pot de disque de frein (20) est disposé un élément de pot (21) relié à celui-ci, qui peut être fixé sur le pot de disque de frein (20).

6. Dispositif de fixation selon une ou plusieurs des revendications précédentes, **caractérisé en ce que** la vis de roue (5) présente une rondelle intermédiaire (22) avec une surface de zone sphérique (23) qui est soutenue dans une surface correspondante d'une rondelle d'appui (20).

7. Dispositif de fixation selon une ou plusieurs des revendications précédentes, **caractérisé en ce que** le disque (11) est rendu étanche par rapport à la coquille intérieure (2) de la roue au moyen d'une pâte d'étanchéité (14).
